# EUROPEAN PATENT SPECIFICATION

(11) **EP 2 907 774 B1**
(45) Date of publication and mention of the grant of the patent: **12.10.2016**
(21) Application number: 15154762.7
(22) Date of filing: 11.02.2015
(51) Int. Cl.: B65G 21/20

(54) **Guiding rail for a table-top chain**
Führungsschiene für Plattengliederkette
Rail de guidage pour chaîne à plaques

(30) Priority: 14.02.2014 IT AN20140024
(43) Date of publication of application: 19.08.2015
(73) Proprietor: Movex S.p.A., 24060 Telgate (BG) (IT)
(72) Inventor: Marsetti, Matteo, 24060 Telgate BG (IT)
(74) Representative: Pilati, Davide

(56) References cited:
- EP-A1- 0 810 168
- EP-A1- 1 364 896
- WO-A1-02/34650
- WO-A1-2010/146098

## Description

There is disclosed herein a guide track for a slat chain of a conveyor according to the preamble of claim 1.

Particularly, there is disclosed a track having a curvilinear axis of extension, for guiding at least one slat chain.

More particularly, there is disclosed a track having a curvilinear axis of extension, for guiding at least one slat chain (said chain being at least partially formed from a ferromagnetic material), which is equipped with magnets adapted to attract the chain(s) toward the sliding surfaces.

The track as disclosed below may form the top and/or bottom of a slat chain conveyor.

As disclosed herein, the term "slat chain" encompasses steel chains, such as those described in Standard ISO 4348, and plastic chains having hinge pins made of a ferromagnetic material.

Most basically, a slat chain comprises a succession of generally plate-like links, which extend transverse to the direction of movement of the chain and define a support surface of the objects to be conveyed.

Each link is joined to a previous link and a next link, relative to the direction of movement of the chain, by means of hinges located in the middle of the links.

A sliding track is known to be used to guide a slat chain, which has a pair of sliding surfaces at a constant distance from each other, which guide the sliding motion of the opposite transverse ends of the chain links.

A recess (also known as "channel") is formed between the two sliding tracks, which can accommodate the articulation members of the slat chain.

When a plurality of slat chains have to be guided, the sliding tracks may comprise multiple lanes, one for each chain.

In this case, the sliding tracks located between two contiguous recesses may have an increased width, to act as a common sliding track for two contiguous chains.

If the links are at least partially formed from ferromagnetic material, then the guide track for the chain may also comprise magnets, located below the level of the sliding surface, at the center line of the channel.

These magnets, which are usually placed on the bottom of the "channel", create a magnetic field that will allow the links of the slat chain to adhere to the sliding surface of the guide.

Without the attractive force exerted by the magnets, the chain links would tend to rise up from the guide track and affect the stability of the items being carried.

The guide tracks for slat chains may have a rectilinear or curvilinear axis.

Examples of guide tracks having a curvilinear axis for slat chains equipped with magnets are disclosed in patents EP 0 325 333 (Regina Sud S.p.a.), EP 0 790 197 (MCC Nedelands S.p.a.), EP 0 903 307 (Regina Sud S.p.a.), EP 0 916 599 (System Plast S.p.a.), CN 201021409 (Zhangfa Wu) e DE 4221546 (Flexon GmbH).

The European Patent EP 1 091 894 (MCC Nederlands B.V.) discloses a track having a curvilinear axis for a chain conveyor having slat-like links, comprising at least two separate and distinct guide elements, that define the surface of the sliding track of the chain links.

Each guide consists of a profile having a curvilinear axis and joined to an underlying support structure by a form-fit.

In one of the illustrated embodiments, each guide has a generally T-shaped groove, which is slidably connected to a matingly shaped attachment member which projects out of an underlying support element.

The application WO 2010/146098 (Rexnord Marbett s.r.l.) discloses a guide track according to the preamble of claim 1, having a curvilinear axis for a chain conveyor having slat-like links, which is possibly equipped with magnets and comprises at least two separate and distinct guides having curvilinear axes, defining the surface of the sliding track.

Each guide consists of a profile having a curvilinear axis and joined to an underlying support structure by a form-fit.

In one of the illustrated embodiments, each guide has an attachment portion with a dove-tail profile, which is slidably coupled to a matingly-shaped groove, formed in an underlying support structure.

In the arrangements as disclosed in EP 1 091 894 and WO 2010/146098, the two guides that form together the surface of the overall guide track, may be formed separately.

The guide elements may be formed with a low-friction, high wear-resistant material, whereas the support structure for the guide elements may be formed with a less expensive material.

Nevertheless, the arrangements as disclosed in EP 1 091 894 and WO 2010/146098 also suffer from certain drawbacks.

It shall be noted that these conveyor tracks are made of modules that may be as long as 3 meters and, in case of curvilinear tracks, the radiuses of curvature may range from 0.25 meters to 1.5 meters.

With elements of such a length, a sufficient processing accuracy for reliable sliding form-fit engagements can be only obtained using high-precision machine tools, which have a high cost and require considerable expertise on the part of the operator.

Therefore, in the devices of EP 1 091 894 and WO 2010/146098, difficult operations are required to mount and remove the guides to and from the underlying support structure.

Patent WO 02/34650 discloses a guide track for a slat chain comprising two distinct guides mounted to intermediate stainless steel supports, which are in turn bolted to a stainless steel support structure comprising a pair of metal profiles held together by tie-rods,

The arrangement of WO 02/34650 is not practical, especially for guide tracks having a curvilinear axis of extension.

Furthermore WO 02/34650 does not mention the possibility of using magnets for improved stability of the items conveyed by the slat chain.

Also, the device as disclosed in WO 02/34650 would not be suitable for use with magnets, because the support structure, which is made of stainless steel, has a high magnetic permeability and would eventually short-circuit the magnetic flux lines, whereby the magnets would lose their effectiveness.

The object of this invention is to obviate at least some of prior art problems and particularly those set out hereinbefore.

This object is fulfilled by a guide track as defined in claim 1.

Further advantages may be obtained by the additional features of the dependent claims.

Possible embodiments of the guides will be now described with reference to the accompanying drawings in which:
- Figure 1 is an exploded view of a guide track having a curvilinear axis for a slat chain;
- Figure 2 is an exploded front sectional view of the track of Figure 1;
- Figure 3 is a perspective view of a portion of a slat chain;
- Figure 4 is a perspective view of a three-lane curvilinear track for slat chains;
- Figure 5 is a second perspective view of the guide track of Figure 1;
- Figure 6 is an exploded view of an alternative embodiment of the curvilinear track as shown in Figure 1;
- Figure 7 is an exploded front sectional view of the track of Figure 6.

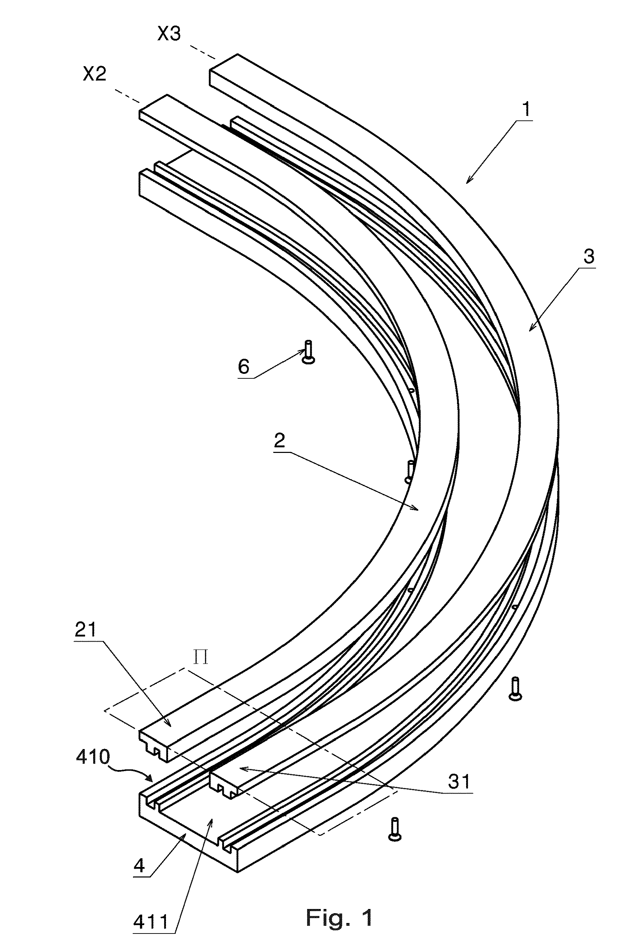

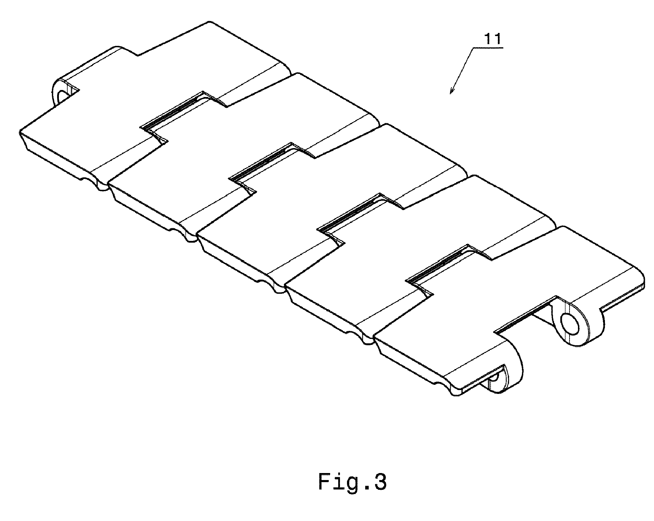

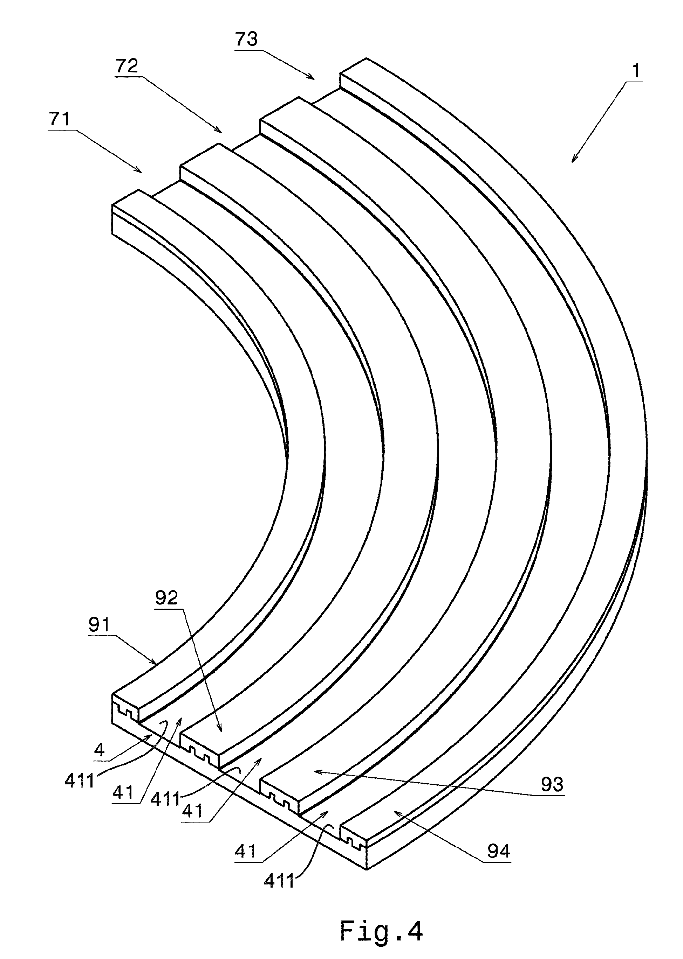

Referring to the accompanying drawings, numeral 1 generally designates a guide track (a one-lane track in Figures 1 to 7 and a three-lane track in Figure 4) for a slat chain 11.

The guide track 1 comprises at least two lateral guides 2, 3 at a constant distance from each other, which define a sliding surface π.

The two guides 2, 3 are distinct from each other, each having its own axis of extension X2, X3. A support structure 4 is also provided, here an approximately plate-like element, having a first side 410 and a second side 412 opposite thereto.

The guides 2, 3 are fixed to the first side 410 of the support 4.

In the embodiments of Figures 1, the first side 410 of the support 4 has a depressed central portion 411 (extending parallel to the axes X2, X3) and two side portions having the guides 2, 3 fixed thereto.

In the embodiment of Figure 4, the first side 410 of the support 4 has three depressed central portions 411, 411, 411 (one for each lane) which extend in three parallel directions.

A recess 41 is formed between the two guides (or between each pair of guides 2, 3), which can accommodate the articulation members of the slat chain 11.

In the embodiments as disclosed herein, each guide 2, 3 is coupled to the support structure 4 by a form-fit 5.

The form-fit 5 has no recesses or undercuts (T and dovetail joints being thus excluded).

Due to this feature, each lateral guide 2, 3 may be coupled to the support structure 4 by a movement along an axis Y orthogonal to the sliding surface π (and orthogonal to the axes of extension X2, X3 of the guides 2, 3).

The form-fit 5 may be an interference fit.

A plurality of connecting screws 6, 6, ... 6 (e.g. self-tapping screws) are also provided, for fastening each lateral guide 2, 3 to the support structure 4, and prevent the guides 2, 3, from being accidentally released from the support structure 4.

The direct connection of the lateral guides 2, 3 and the support structure 4 is beneficial in terms of both construction and costs.

The support structure 4 may be formed with apertures 444 which have the purpose of allowing the passage of water when the guide track 1 is being washed.

In the illustrated embodiment, each lateral guide 2, 3 has a curvilinear axis of extension X2, X3, and the lateral guides have different lengths and different radiuses of curvature.

Particularly, each lateral guide 2, 3 may consist of a profile 2, 3 having a substantially and/or generally constant section and a curvilinear axis of extension X2, X3 (e.g. with a constant radius of curvature).

The lateral guides 2, 3 may be, for instance, formed from high-molecular-weight-polyethylene, whereas the support structure 4 may be formed from low-molecular-weight-polyethylene (which is less expensive than high-molecular-weight-polyethylene).

Since the support structure 4 is formed from a low-magnetic-permeability material, such as polyethylene, the magnetic flux lines are prevented from being short-circuited by the support structure.

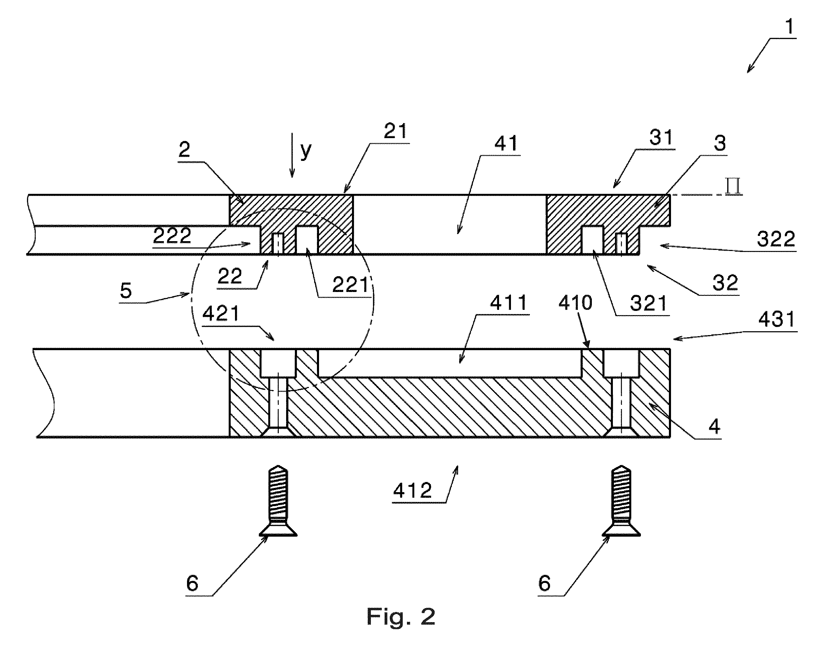

In the embodiment of Figure 2, each profile 2, 3 has a side 21, 31 designed to act as a sliding surface and a portion 22, 32 in which at least one groove 221, 222; 321, 322 and/or at least one cog is formed.

The portion 22, 32 of each guide 2, 3 (in which at least one groove 221, 222; 321, 322 is formed) is coupled to matingly shaped portions 421, 431 of the support structure 4.

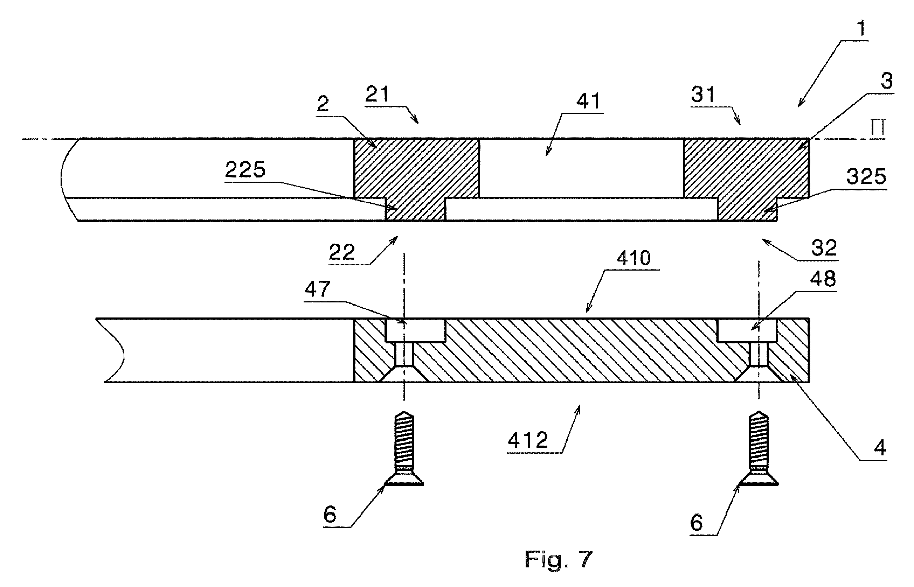

In the illustrated embodiment, the form-fit 5 of each guide 2, 3 with the plate-like support element 4 comprises at least one cogged joint, for example one cogged joint (see Figure 7) or two cogged joints (see Figure 2).

The connecting screws 6, 6, ... 6 are introduced from the second side 412 of the support structure 4 and are preferably placed in such a position that they may be secured to the thicker portion of the guides 2, 3, thereby maximizing their service life.

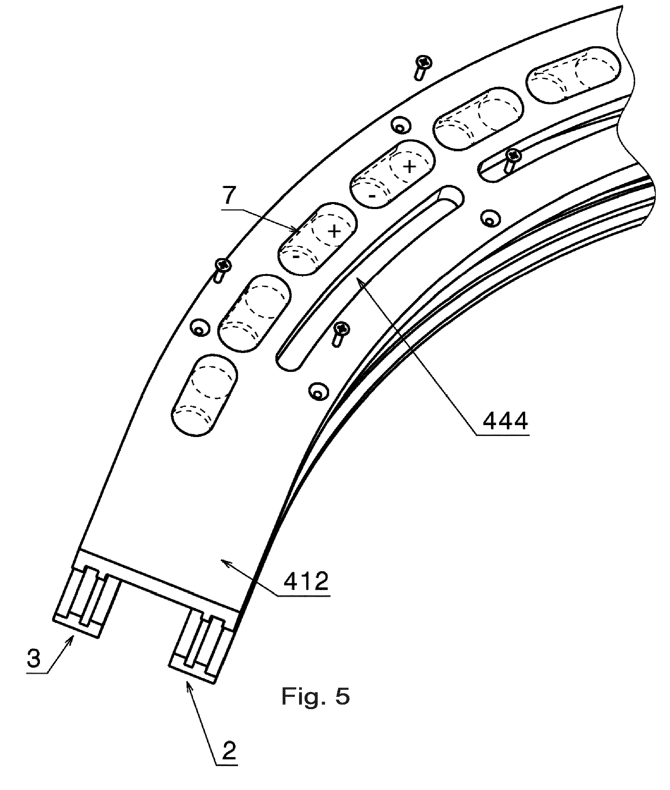

The guide track 1 may comprise a plurality of magnets 7 which have the purpose of attracting the chain links against the sliding surfaces 2, 3 (see Figure 5).

In the illustrated embodiment, the magnets 7 are arranged in pairs of opposite polarity, and are accommodated in recesses formed in the support structure 4 for access from the second side 412 of the support 4.

In the embodiment of Figure 4, the guide track 1 comprises a plurality n of sliding tracks 91, 92, 93, 94 which define n-1 lanes 71, 72, 73, for as many slat chains to slide thereupon.

Advantageously, the sliding tracks 92, 93 located between contiguous recesses have such a width, as to act as a common sliding track for two contiguous chains.

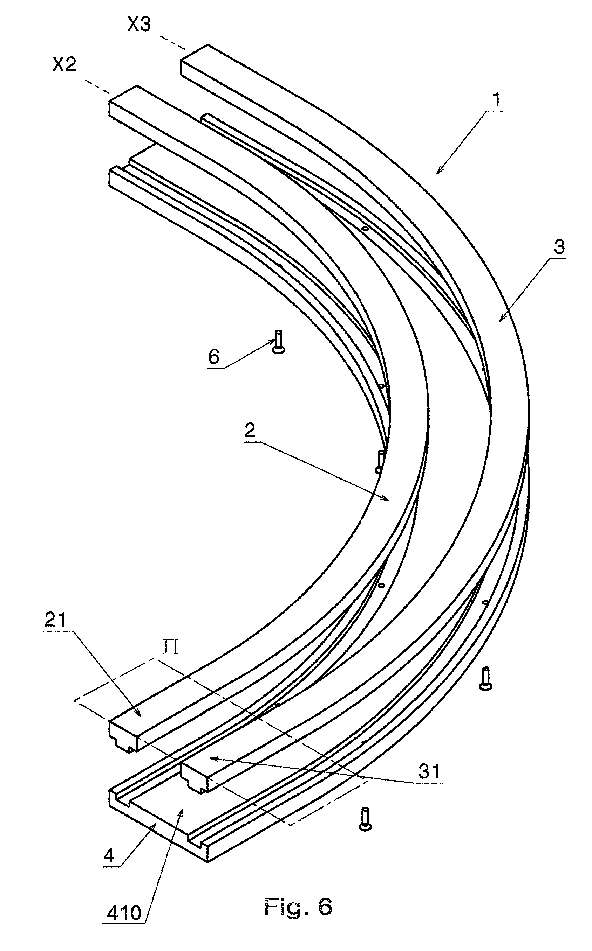

In a possible alternative embodiment (as shown in Figures 6 and 7) the form-fit 5 between each lateral guide 2, 3 and the support structure 4 has only one cogged joint.

Namely, each guide 2, 3 consists of a profile 2, 3 having a substantially and/or generally constant section and an axis of extension X2, X3 (here a curvilinear axis).

Each profile 2, 3 has a sliding surface 21, 31 and an underlying portion 22, 32 with a cog 225, 325 extending therefrom, which is designed to fit into a slot 47, 48 formed in the first side 410 of the support 4.

## Claims

1. A guide track (1) for a slat chain (11)
comprising
a) at least two guides (2, 3) at a constant distance from each other, which define a sliding surface (π), said two guides (2, 3) being distinct from each other, each guide (2, 3) having an axis of extension (X2, X3), each guide (2, 3) being formed as a single piece, said two guides (2, 3) defining a recess (41) that can accommodate the articulation members of a slat chain;
b) a support structure (4) having a first side (410) and a second side (412) opposite thereto, said guides (2, 3) being fixed to said first side (410), said support structure (4) being formed as a single piece;
c) each guide (2, 3) being coupled to said support structure (4) by a form-fit (5);
**characterized in that** said form-fit (5) has no recesses or undercuts;
and **in that** a plurality of connecting screws (6, 6, ... 6) are provided, for fastening each guide (2, 3) to said support structure (4);
and **in that** said form-fit (5) between each lateral guide (2, 3) and said support structure (4) comprises at least one cogged joint.

2. A guide track as claimed in claim 1, wherein each guide (2, 3) consists of a profile (2, 3) having a substantially and/or generally constant section and an axis of extension (X2, X3), said profile (2, 3) having a sliding surface (21, 31) and an underlying portion (22, 32) with a cog (225, 325) extending therefrom to fit into a slot (47, 48) formed in the first side (410) of the support (4).

3. A guide track as claimed in claim 1 or 2, wherein each guide (2, 3) has a curvilinear axis of extension (X2, X3).

4. A guide track (1) as claimed in any of the preceding claims, comprising a plurality of magnets (7) accommodated within said support structure (4).

5. A guide track (1) as claimed in any of the preceding claims, wherein said support structure (4) has at least one aperture (444) which allows communication between said first and second sides (410, 412).

6. A guide track (1) as claimed in any of the preceding claims, wherein said support structure (4) is approximately a plate-like element.

## Patentansprüche

1. Führungsschiene (1) für Bandkette (11) umfassend
a) mindestens zwei eine Schiebefläche (n) bestimmende Führungen (2, 3) mit konstantem Abstand, wobei die genannten beiden Führungen (2, 3) von einander getrennt sind, wobei jede Führung (2, 3) eine Erstreckungsachse (X2, X3) hat, wobei jede Führung (2, 3) als Einzelstück gebildet ist, wobei die genannten beiden Führungen (2, 3) eine Ausnehmung (41) bestimmen, die die Gelenkglieder einer Bandkette aufnehmen kann;
b) eine Trägerstruktur (4), die eine erste Seite (410) und eine zweite gegenüberliegende Seite (412), wobei die genannten Führungen (2, 3) an die genannte erste Seite (410) befestigt sind, wobei die genannte Trägerstruktur (4) als Einzelstück gebildet ist;
c) wobei jede Führung (2, 3) mit der genannten Trägerstruktur (4) durch eine formschlüssige Kupplung (5) verbunden ist;
**dadurch gekennzeichnet, dass** die genannte formschlüssige Kupplung (5) keine Ausnehmungen oder Hinterschneidungen hat;
und dass eine Vielzahl von Verbindungsschrauben (6, 6, ... 6) vorhanden ist, um jede Führung (2, 3) an die genannten Trägerstruktur (4) zu befestigen;
und dass die genannte formschlüssige Kupplung (5) zwischen jeder Seitenführung (2, 3) und der genannten Trägerstruktur (4) mindestens eine gezahnte Gelenke umfasst.

2. Führungsschiene nach Anspruch 1, worin jede Führung (2, 3) aus einem Profil (2, 3) besteht, das einen wesentlich und/oder allgemein konstanten Querschnitt und eine Erstreckungsachse (X2, X3) hat, wobei das genannte Profil (2, 3) eine Schiebefläche (21, 31) und eine darunterliegende Portion (22, 32) mit einem daraus hervorragenden Zahn (225, 325) hat, wobei der Zahn in einem an der ersten Seite (410) der Trägerstruktur (4) gebildeten Schlitz (47, 48) hineinpasst.

3. Führungsschiene nach Anspruch 1 oder 2, worin jede Führung (2, 3) eine krummlinige Erstreckungsachse (X2, X3) hat.

4. Führungsschiene (1) nach irgendeinem der vorhergehenden Ansprüche, umfassend eine Vielzahl von innerhalb der genannten Trägerstruktur (4) aufgenommenen Magneten (7).

5. Führungsschiene (1) nach irgendeinem der vorhergehenden Ansprüche, worin die genannte Trägerstruktur (4) mindestens eine Öffnung (444) hat, die die Kommunikation zwischen der genannten ersten und der genannten zweiten Seite (410, 412) erlaubt.

6. Führungsschiene (1) nach irgendeinem der vorhergehenden Ansprüche, worin die genannte Trägerstruktur (4) ungefähr ein plattenartiges Element ist.

## Revendications

1. Rail de guidage (1) pour chaîne à plaques (11) comprenant
a) au moins deux guidages (2, 3) à une distance constante l'un de l'autre, définissant une surface de glissement (n), lesdits deux guidages (2, 3) étant distincts l'un de l'autre, chaque guidage (2, 3) ayant un axe d'extension (X2, X3), chaque guidage (2, 3) étant formé en une seule pièce, lesdits deux guidages (2, 3) définissant un renfoncement (41) qui peut loger les éléments d'articulation d'une chaîne à plaques;
b) une structure de soutien (4) ayant un premier côté (410) et un second côté (412) opposé au premier, lesdits guidages (2, 3) étant fixés audit premier côté (410), ladite structure de soutien (4) étant formée en une seule pièce;
c) chaque guidage (2, 3) étant couplé à ladite structure de soutien (4) par une liaison de forme (5) ;
**caractérisé en ce que** ladite liaison de forme (5) n'a aucun renfoncement ni aucune encoche;
et **en ce qu'**une pluralité de vis de connexion (6, 6, ... 6) est fournie pour relier chaque guidage (2, 3) à ladite structure de soutien (4);
et **en ce que** ladite liaison de forme (5) entre chaque guidage latéral (2, 3) et ladite structure de soutien (4) comprend au moins un joint denté.

2. Rail de guidage selon la revendication 1, où chaque guidage (2, 3) est constitué d'un profil (2, 3) ayant une section substantiellement et/ou généralement constante et un axe d'extension (X2, X3), ledit profil (2, 3) ayant une surface de glissement (21, 31) et une portion sous-jacente (22, 32) avec une dent (225, 325) s'étendant d'elle pour entrer dans une fente (47, 48) formée dans le premier côté (410) de la structure de soutien (4).

3. Rail de guidage selon la revendication 1 ou 2, où chaque guidage (2, 3) a un axe d'extension curviligne (X2, X3).

4. Rail de guidage (1) selon l'une quelconque des revendications précédentes, comprenant une pluralité d'aimants (7) logés à l'intérieur de ladite structure de soutien (4).

5. Rail de guidage (1) selon l'une quelconque des revendications précédentes, où ladite structure de soutien (4) a au moins une ouverture (444) permettant la communication entre ledit premier et ledit second côté (410, 412).

6. Rail de guidage (1) selon l'une quelconque des revendications précédentes, où ladite structure de soutien (4) est un élément approximativement semblable à une plaque.
